# EUROPEAN PATENT SPECIFICATION

(11) **EP 1 012 042 B1**
(45) Date of publication and mention of the grant of the patent: **17.07.2002**
(21) Application number: 97941174.1
(22) Date of filing: 12.09.1997
(51) Int. Cl.: B65B 23/16

(54) **TRAY FILLER WITH INDEXABLE SWING ARM CONVEYOR**
VORRICHTUNG ZUM FÜLLEN VON SCHALEN MITTELS EINES INDEXIERBAREN SCHWENKARMFÖRDERERS
DISPOSITIF DE REMPLISSAGE DE BARQUETTE, DOTE D'UN TRANSPORTEUR A BRAS OSCILLANT AMOVIBLE

(43) Date of publication of application: 28.06.2000
(73) Proprietor: SIG Pack Systems AG, 8222 Beringen (CH)
(72) Inventor: FLUCK, René, CH-8226 Schleitheim (CH); WANNER, Ernst, CH-8200 Schaffhausen (CH); KLECKA, Werner, CH-8200 Schaffhausen (CH)
(74) Representative: Münch, Otto, Dipl.-Ing.
(86) International application number: IB9701245
(87) International publication number: WO9914125

(56) References cited:
- EP-A- 0 189 693
- FR-A- 2 142 471
- GB-A- 2 170 164
- US-A- 4 882 895
- US-A- 5 095 684

## Description

### BACKGROUND OF THE INVENTION

I. Field of the Invention: This invention relates generally to packaging machinery, and more particularly to a machine for loading products into compartmentalized trays and for feeding the filled trays to a high-speed film wrapping station.

II. Discussion of the Prior Art: In packaging certain food items like cookies and biscuits to protect them from damage during shipping and handling, it is desirable that they be placed in trays having a plurality of compartments or cavities that are arranged side-by-side across the width dimension of the tray and then overwrapped with paper or plastic film. Because the cookies or biscuits are restrained against movement by the walls defining the plural compartments, they tend not to chip or break while being shipped from the manufacturer to the grocery outlet, when handled in placing the item on the store shelves for display and during later transport and handling by the retail customer.

In a typical bakery manufacturing facility, cookies, biscuits, or other confectionary items will typically leave the cooking ovens on a wide belt which then passes through a cooling station before being packaged and wrapped. The present invention is concerned with an improved apparatus for receiving the cooled articles and transporting them at a high rate of speed to a tray filling station where the articles are deposited into compartmentalized trays. At the infeed of the system is a conveyor belt and guides for receiving the articles in random order and placing them in a single file orientation and with a predetermined spacing therebetween. A means may be provided for reorienting over-sized, oblong-shaped articles so that their narrow end faces the downstream direction. The articles then traverse an inspection belt where optical sensing means are provided for determining whether the length, width and height dimensions of the articles are within predetermined limits and, if not, out-of-tolerance articles are ejected from the article stream. Upon leaving the inspection belt, the articles passing inspection enter onto a tray-loading swing belt assembly comprising an endless horizontal belt and two parallel, spaced-apart vertically-oriented side belts that are mounted together on a frame that is pivotable about a generally vertical axis at the infeed end of the swing conveyor.

At the same time that the articles to be packaged are traversing the tray loading swing belt assembly, empty trays are simultaneously being stepped along a tray feeder comprising a flighted chain that is designed to operate with step-wise motion where the length of the step is a function of the height dimension of the articles and the geometry of the trays themselves.

An individual tray may typically comprise a molded plastic rectangular box-like configuration having a plurality of integrally formed dividers so as to form a plurality of compartments across the width dimension of the tray. Individual trays are loaded between pusher fingers on the flighted chain conveyor and are carried along in a downwardly and forwardly sloping direction leading to a take-away conveyor disposed beneath the swing belt conveyor and the aforementioned inspection belt. The swing belt conveyor is also inclined downward so that its discharge end comes within a close predetermined distance from the path of the tray feeding conveyor.

As each article reaches the discharge end of the swing conveyor and is deposited into one of the parallel compartments, an optical sensor sends a signal to a program logic controller (PLC) connected in controlling relation to a servo motor governing the lateral movement of the swing conveyor so that the next article reaching the discharge end will be deposited into an adjacent compartment. When the swing conveyor has swept past each of the tray compartments and deposited an article into those compartments, the tray feeding conveyor will, itself, index by the height dimension of the article so that on a return stroke of the swing conveyor, additional articles will be deposited one at a time onto the stack contained in each of the plural compartments of the tray. Counts are maintained so that it is known when a given tray has been completely filled so that the filled tray will be deposited on the take-away conveyor while a new tray becomes positioned adjacent the discharge end of the swing conveyor.

Published PCT application WO95/18053 describes a device used to distribute a single lane of goods into two or more lanes to be packaged and employs a pair of infeed belts 24 and 26 that are swingable to transfer a single file of articles into one or the other of two lanes. This patent does not teach or suggest the aspect of the present invention wherein products are serially discharged into trays moving along a conveyor that is synchronized with the swing movement of a conveyor.

U.S. Patent 5,012,628 to Van Oord discloses a system for inserting products into a box where the box is carried along a conveyor that is downwardly descending so as to bc at a predetermined angle with the feed direction of the articles being loaded into the box. Rather than employing a swing conveyor, the system of the '628 patent employs four endless belts that are arranged so that a box can be filled simultaneously with four mutually adjacent articles so that four rows of such articles are formed in the box.

U.S. Patent 3,996,723 to Greenwell describes a machine that is adapted to receive articles one at a time from a conveyor and to organize the articles into a group of several layers each of a desired number and to deposit the articles into a carton or the like. It incorporates a swinging conveyor whose discharge end can be shifted to a plurality of discharge points. The technique described in the '723 patent does not disclose an arrangement for transporting trays to a loading station in intermittent steps that correspond to the height dimension of the product being loaded. Instead, the indexing of the conveyors is based strictly on a count value.

EP-A-189 693 discloses an apparatus for loading cookies into trays. The apparatus has an infeed conveyor with a portion which is pivotable about a horizontal axis between two positions for feeding three columns of cookies either to an upper or to a lower second conveyor. The second conveyors are also pivotable about horizontal axes at their upstream end. Their downstream end is guided along a linear steeply inclined path which is parallel to the open face of the trays to be filled. The trays are brought into their loading position by a turntable. Three cookies are filled in simultaneously at a time into three adjacent compartments of the trays. The downstream end of the respective second conveyor is then lifted by the height of the cookies to fill in the next row. When one tray is filled the infeed conveyor switches to its other position.

### SUMMARY OF THE INVENTION

The present invention provides a packaging machine for inserting products into trays of a predetermined length and width dimension, the trays being divided into a plurality of elongated cavities arranged side-by-side across the width dimension of the trays. The products have a length, width and height dimension falling into a predetermined range so that a plurality of such products may be stacked in each of the plurality of cavities or compartments comprising a tray. The machine includes a first conveyor for transporting empty trays to a loading station in intermittent steps where the length of the steps correspond to the height dimension of the product being packaged. Products to be packaged are received on a conveyor belt designed to transport the products in single file order past an inspection device for determining whether the length, width and height dimension of the product fall within prescribed specifications and, if not, for ejecting out-of-spec products from the stream. The discharge end of the inspection belt feeds the products passing inspection onto the inlet end of a swing belt conveyor that is pivotable about a vertical axis proximate the inlet end thereof. Associated with the swing conveyor is a drive means for rotating it about the vertical axis with a reciprocating motion such that the discharge end of the swing conveyor traverses an arc corresponding at least to the width dimension of the trays as products are discharged into the cavities of the trays or in overflow position.

The machine of the present invention thereby provides a method for stacking products into cavities of compartmentalized trays at a loading station that comprises the steps of forming a single file stream of the products on a first conveyor with a predetermined spacing therebetween; inspecting the products traversing the first conveyor to determine compliance with predetermined product size requirements; transporting the trays on a tray conveyor to the loading station in intermittent, incremental steps; transferring the products from the first conveyor to an inlet end of an endless belt swing conveyor that is pivotable about a vertical axis located proximate the inlet end thereof, such that the discharge end of the swing conveyor can be made to traverse a predetermined horizontal arc corresponding to at least a width dimension of the trays; intermittently swinging the swing conveyor through the predetermined arc in steps corresponding to a spacing between adjacent cavities in the trays each time a product is discharged from the discharge end of the second conveyor into one of the cavities and advancing the tray conveyor one step corresponding to a height dimension of the product when the discharge end of the swing conveyor traverses the predetermined arc.

### DESCRIPTION OF THE DRAWINGS

The foregoing features, objects and advantages of the invention will become apparent to those skilled in the art from the following detailed description of a preferred embodiment, especially when considered in conjunction with the accompanying drawings in which:
Figure 1 is a side elevational view of a preferred embodiment of the tray loader in accordance with the present invention;
Figure 2 is a top plan view of the apparatus of Figure 1;
Figure 3 is a perspective view of a typical tray;
Figure 4 is a top plan view of a product orienting conveyor used in the system of Figure 1; and
Figure 5 is a partial end view of the product orienting conveyor of Figure 4.

### DESCRIPTION OF THE PREFERRED EMBODIMENT

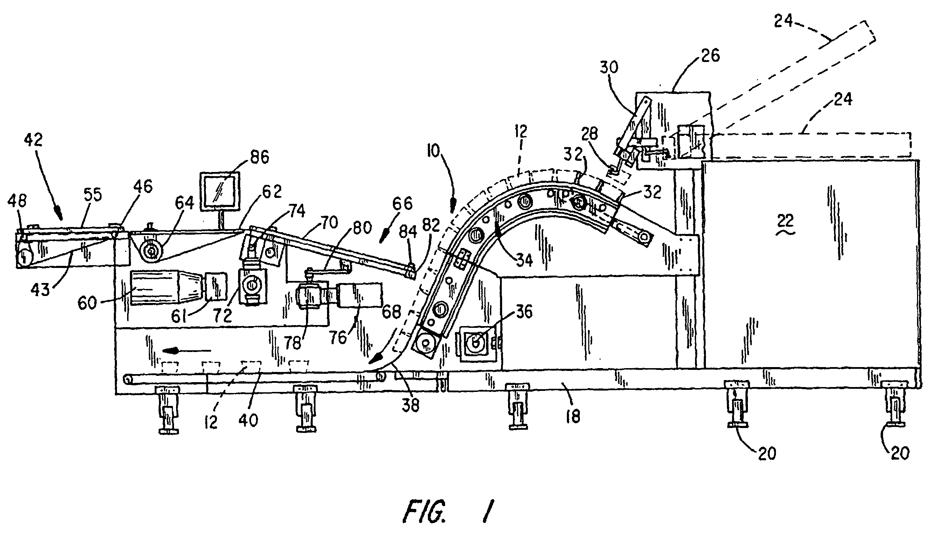

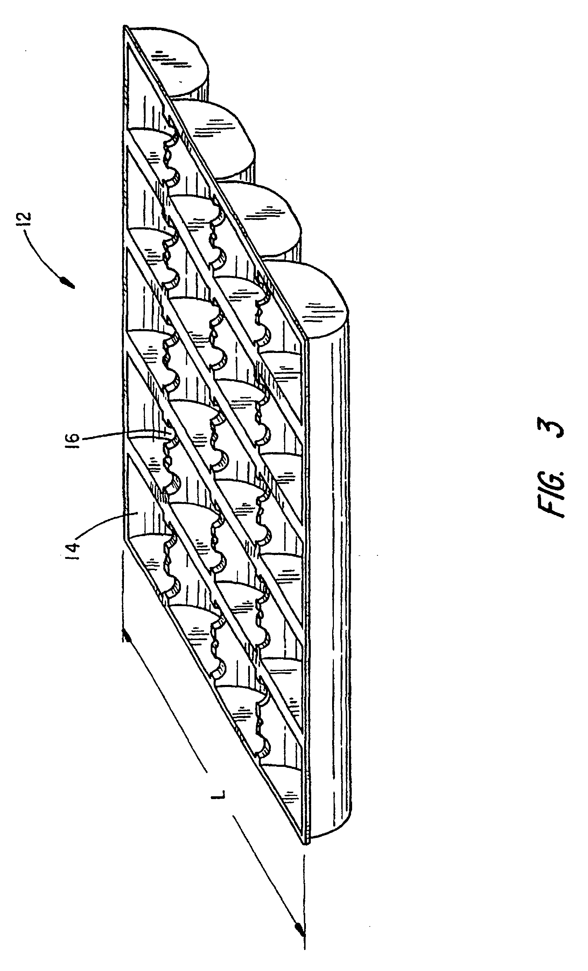

Referring to Figure 1, there is indicated generally by numeral 10 a machine for loading articles into trays of the type illustrated in Figure 3. Referring momentarily to Figure 3, the tray 12 is generally rectangular and preferably formed from a suitable plastic in a vacuum forming operation so as to include a plurality of cavities or compartments as at 14, 16, etc. that are shaped to accommodate the product to be packaged therein. Assuming that for the purposes of illustration, the articles to be packaged are round cookies, the cavities 14 and 16 will then also be rounded and will have a diameter slightly larger than the diameter of the cookies to be stacked in the tray. If the tray is designed to accommodate three dozen cookies, it will typically be divided into six compartments and the length dimension, L, thereof will accommodate the height dimension of six cookies to be stacked in each of the compartments.

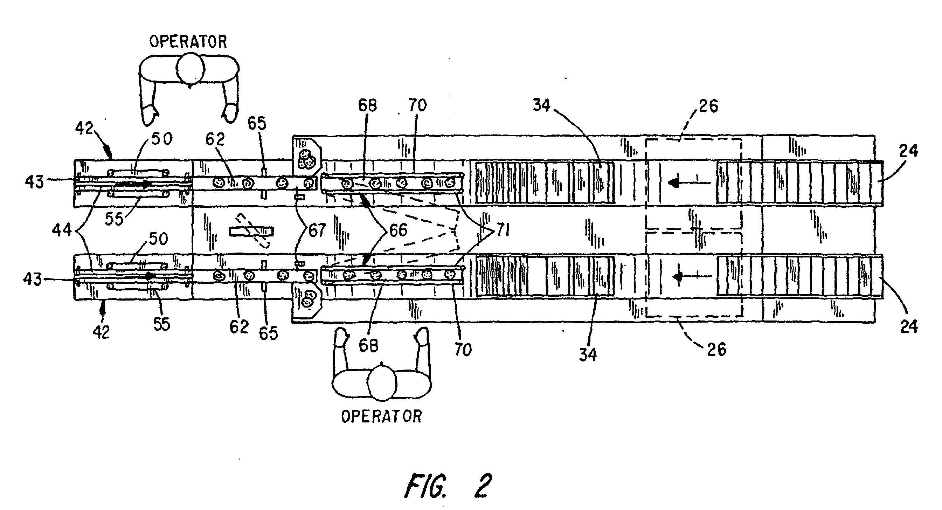

Referring again to Figure 1 and also to Figure 2, the tray feeder 10 includes a base or frame 18 supported on jack pads, as at 20, to permit leveling thereof. Supported on the base 18 is a cabinet 22. A tray magazine 24 illustrated in broken line form is shown resting on cabinet 22. The magazine 24 is adapted to be pivoted to the inclined position illustrated within a tray denester assembly 26. One tray denester suitable for use in implementing the present invention is commercially available. It includes a vacuum head 28 mounted on a pivot arm 30 that is capable of swinging through an arc in the clockwise direction from the position illustrated so as to suck an individual tray from a stack of nested trays contained within the magazine 24 and then swing it in a return stroke in the counterclockwise direction to deposit the picked tray between the pusher fingers 32 on a flighted chain conveyor, indicated generally by numeral 34. Other devices for picking and placing trays are also available. The flighted chain conveyor 34 is designed to be driven by a servo drive motor 36 in incremental steps as will be explained in greater detail hereinafter.

As can be seen in Figure 1, the flighted chain conveyor for transporting empty trays to the loading station traverses an arcuate path from an upper elevation to a lower elevation and after the individual trays are filled, they leave the flighted conveyor and traverse a gravity slide 38 so as to be deposited on a take-away endless belt conveyor 40 mounted to the frame 18.

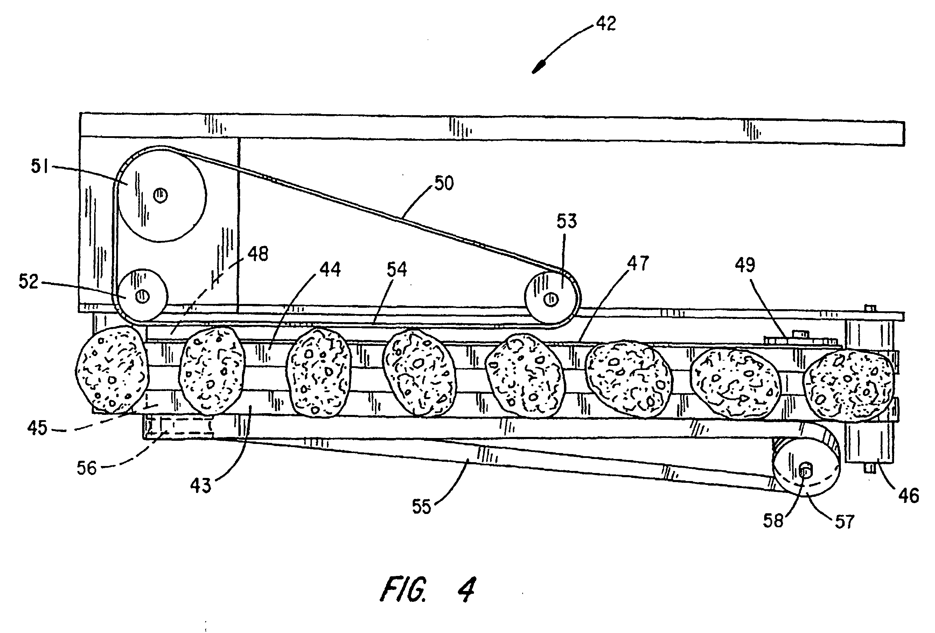

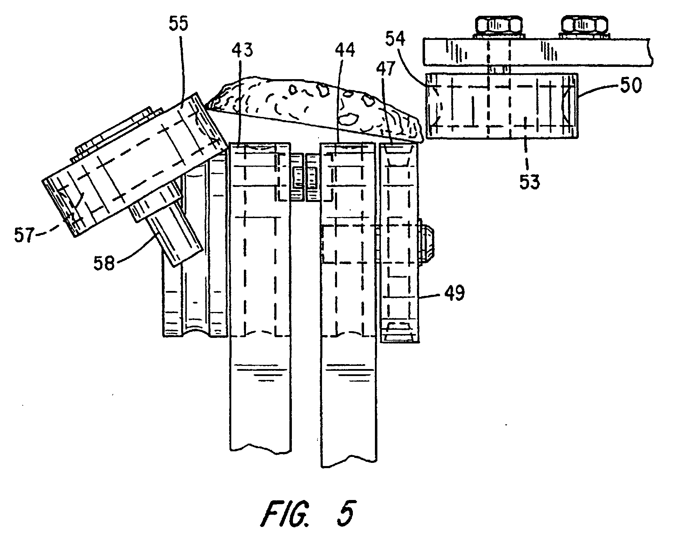

Products to be packaged enter the tray feeding machine 10 from an infeed conveyor (not shown) and are deposited onto an optional product rotating conveyor indicated generally by numeral 42 in Figure 1, and more particularly illustrated in the detailed top plan view thereof illustrated in Figure 4 and in a right end view thereof shown in Figure 5. The product rotating conveyor 42 includes first and second, narrow, horizontal endless belts 43 and 44 deployed about a drive roller 45 at the inlet end of the product rotating conveyor and about a nose roller 46. A further endless horizontal belt 47 whose upper flight is slightly vertically depressed below the upper flights of belts 43 and 44 is deployed about a drive pulley 48 and a driven pulley 49. Positioned vertically along the outer edge of the belt 47 is a side belt 50 that is adapted to be driven by a motor-driven drive pulley 51 about idler pulleys 52 and 53 which together define a belt span 54 adjacent the side edge of the endless belt 47.

A further endless belt 55 is deployed about a drive pulley 56 that is mounted for rotation about a horizontal axis and a driven pulley 57 which is mounted for rotation on an axis 58 that is oriented at an angle of about 60° to the horizontal so as to effectively twist the belt 55 so that an upper flight thereof transforms from a horizontal plane at the conveyor inlet end to an elevated inclined plane in moving toward the outlet end of the conveyor.

If the belts 43 and 44 are assumed to be driven with a linear velocity of V, the belt 55 will be driven at a slightly greater velocity V+ΔV while belts 47 and 50 are each driven with a linear velocity of V-ΔV. As can best be seen in Figure 4, oblong shaped products entering onto the product turning conveyor 42 at its inlet end are carried by the belts 43 and 44 until a point is reached at which the products engage the span 54 of the side belt 50 and the twisted side belt 55. In that the belt 55 is moving slightly faster than the belts 43 and 44, there will be a tendency for the product to rotate. This rotation is enhanced when the product is urged against the flight 54 of the slower moving belt 50. As the products move toward the outlet end, they also rise up on the flight of the twisted belt 55 that brings an edge of the product into contact with the slower moving belt 47 as the product becomes tipped as shown in Figure 5. The product is turned until its major axis becomes aligned with the belts 43 and 44 as the products are discharged. Thus, any product traversing the product turning belt 42 will be turned as it is translated so that if non-symmetrical, its narrowest end edge will be facing in the direction of flow along the horizontal span of the belts 43 and 44. This ultimately permits the product to more readily pass into a tray compartment.

As products leave the reorienting conveyor 42, they enter onto an inspection belt 62 which is driven by a motor 60, via a suitable transmission link 61 that couples to the inspection belt's drive pulley 64. The inspection belt provides support for product as they pass through an electro-optical inspection device 65 (Fig. 2) and past a pneumatic reject mechanism 67. With the product properly aligned on the inspection belt, the products (cookies) are inspected, via photo eyes 65, for size and spacing (pitch) qualification. This inspection system detects physical deviations in product size regarding height, width and length and also detects cookie pieces and possibly loose chocolate chunks that may have broken off of a cookie. The out-of-size products and other debris are rejected from the inspection belt by means of a properly timed blast of clean air from a jet 67 focused onto the product or particles. The signal from an electronic encoder (not shown) tells the air valve to actuate when the inspection belt 62 has traveled the distance from the inspection point 65 to the ejection station 67.

From the inspection belt 62, the products transfer to the tray loading swing belt assembly, indicated generally by numeral 66. This belt assembly consists of a slightly declining transport belt 68 and two vertical product guiding side belts 70 and 71. The motor 52 also is arranged to drive the power transmission 72 for the movement of side belts 70 and 71 comprising the swing belt assembly 66.

The swing belt assembly 66 is pivotally mounted on an axis 74 located proximate the inlet end thereof. A servo motor 76 is coupled through a suitable transmission 78 to a crank arm 80 that is pivotally joined to the swing conveyor assembly 66.

The discharge end of the swing conveyor is identified by numeral 82 and located proximate the discharge end thereof is an electric eye 84 which is adapted to provide a signal to the system's microprocessor so that a loading event can be registered. Should the signal from the eye persist more than a predetermined time interval, a jam condition is signaled which causes the swing belt 66 to index outside the width dimension of this tray to a "product dump" position where the products will be directed into a collection tray. At the same time, the tray in which the jam has occurred is indexed out of the loading zone and the next empty tray is automatically indexed into position for loading. Any jam on the swing belt normally clears automatically upon the swing belt reaching the "product dump" or overflow position. When the jam has cleared, the maintained signal from the sensor 84 ceases or again again becomes intermittent which, in turn, causes the swing belt 66 to automatically index to a "start loading" position, and the tray loader 10 automatically resumes normal operation.

The servo motors 36 and 76 are made to move intermittently under control of the system microprocessor, which preferably comprises an Allen-Bradley SLC/504 programmable logic controller (PLC). However, limitation to that device is not to be inferred. The operator interface includes a color display 86 and a keyboard (not shown) for entering set-up parameters including such things as carton size, number of compartments, product length, width and height dimensions, belt speeds, etc. Based upon these parameters, the PLC computes the travel increment size for the flighted tray feeding conveyor 34 and the incremental indexing step length of the swing conveyor 66. In addition, under software control, the PLC maintains run time statistics, keeping track of such things as the number of filled trays that have been produced, the number of rejects, etc.

Suitable motion controllers compatible with the Allen-Bradley SLC/504 Programmable Logic Controller are Allen-Bradley 1394 Turbo Co/Pro Series devices. These controllers provide four axes of closed loop digital servo control. As mentioned, one servo is used for the tray indexing conveyor 34 and the other for swing belt motion. The drive motor 52 for the several conveyor belts preferably comprise an Allen-Bradley Model 1305 variable frequency drive. It provides for conveyor speed control. That motor is, in turn, controlled by the system microprocessor which, as already mentioned preferably a programmable logic controller (Allen-Bradley SLC/504).

The reject function performed while products are on the inspection belt 62 assure that the products being placed into tray cavities are of the proper size. The reject function inspects for products that are too long, too short, too wide and too high as compared to the parameters set into the microprocessor at the time of initial setup. A series of photo eyes similar to 65 in Figure 2 provide the means for detecting out-of-size product for the reject function. A photo eye also detects the leading edge of a product which produces a pulse for resetting a counter used to count encoder pulses from the conveyor belt. The encoder pulses are counted to determine that the product is in or out of length specification, i.e., too short, too long or correct. Products that are too short or too long are rejected at the air-blast station 67 located proximate the discharge end of the inspection belt 62.

A further photo eye is positioned relative to the product flow path to detect products that are too wide. When this sensor detects a product that is wider than a preset product width parameter, it too will be rejected at the air-blast station. Still another independent photo eye is positioned to detect products that are too high to fit properly into a tray cavity.

Rejects at the air-blast station also result if it is detected that the gap between adjacent products on the inspection belt is too small so as to be likely to cause jamming. The air-blast will reject a closely trailing product to effectively widen the gap between resulting adjacent products after the intermediate one is blown-off of the inspection belt.

The tray feeder of the present invention also includes further photo eyes for detecting jam conditions on one or more of. the infeed conveyor, the product turning station 42, the entrance to the swing belt conveyor 66 and also at the discharge of the swing belt into the tray cavities. As products leave the discharge end of the swing belt conveyor, the photocell 84 detects the product and signals the motion controller to index the machine to alignment with the next cavity. The index will either occur in the tray conveyor 34 or the swing belt conveyor 66.

Because information concerning the tray configuration, including its length and width dimension as well as the number of cavities are defined at the time of setup, as are the dimensions of the product to be loaded into the trays, the software for the PLC is rather straightforward in terms of providing control information to the tray feeder drive motor 36 and to the swing conveyor motor 76. As product leave the discharge end of the swing conveyor, they are counted and the swing conveyor is indexed to move from one tray cavity to the next and when the count reaches a value equal to the number of tray cavities, the flighted chain tray feeding conveyor is indexed a distance corresponding to the height dimension of the product and then the swing conveyor reverses direction and sweeps across the trays, depositing product in each tray cavity as it steps along. This operation continues until a count is reached indicating that the maximum number of product have been loaded into a tray. The software then causes the tray feeding conveyor to index a different distance than the product height so that the filled tray moves onto the conveyor 42 and the next tray to be filled will be properly positioned, taking into account the distance between the top end of the cavities of the just filled tray and the bottom end of the cavities of the next to be filled tray.

In an alternative embodiment, the flighted chain conveyor 34 may be driven at continuous speed by means of the servo drive motor 36. After loading a first cookie in a first cavity 14, the discharge end 82 of the swing conveyor 66 may be lowered by the same amount as the conveyor 34 has advanced to load the next cavity 16 with a cookie and so on. When all the cavities received a cookie, the discharge end 82 will be raised by a cookie height and the loading with cookies and lowering and sidewards swinging of the end 82 will continue as described above. The raising and lowering of the discharge end of the swing conveyor 66 may be achieved by providing a hinge at the inlet end thereof, the hinge having a horizontal axis. Then, an additional servo motor, transmission and crank arm like those identified by numerals 76, 78 and 80 can be employed to controllably displace the swing conveyor in a vertical direction.

Lowering, raising and sidewards swinging of the discharge end may again be controlled by Allen Bradley SLC/504 PLC.

This invention has been described herein in considerable detail in order to comply with the patent statutes and to provide those skilled in the art with the information needed to apply the novel principles and to construct and use such specialized components as are required. However, it is to be understood that the invention can be carried out by specifically different equipment and devices, and that various modifications, both as to the equipment and operating procedures, can be accomplished without departing from the scope of the invention itself.

## Claims

1. A packaging machine for inserting products into trays (12) of predetermined length and width dimensions, the products having length, width and height dimensions falling into a predetermined range such that a plurality of products may be stacked in each of said trays (12), said machine comprising, in combination:
a) a first conveyor (34) for transporting said trays (12) to a loading station;
b) an endless belt swing conveyor (66) having an inlet end and a discharge end, the endless belt swing conveyor (66) disposed downstream of an infeed conveyor (42, 62) for receiving the products in spaced-apart serial order in a single file stream from the infeed conveyor (42, 62) and conveying them to the loading station, the endless belt swing conveyor (66) being pivotable about an upwardly directed axis (74) proximate the inlet end thereof; and
c) drive means (76) coupled to the endless belt swing conveyor (66) for rotating the swing conveyor about the axis with reciprocal motion such that the discharge end of the swing conveyor (66) traverses a substantially horizontal arc corresponding at least to the width dimension of the trays (12) as products are discharged into the trays (12).

2. The packaging machine of Claim 1 and further including:
a) inspection means (65) cooperating with products traversing the infeed conveyor (42, 62) for determining whether the length, width and height dimensions of the products conform to the predetermined range; and
b) means (67) for ejecting non-conforming products from the single file order stream.

3. The packaging machine as in Claim 2 and further including means (42) cooperating with the infeed conveyor (42, 62) for imparting rotational movement to the products as they traverse the infeed conveyor.

4. The packaging machine as in Claim 3 wherein the means (42) for imparting rotational movement to the products comprises:
(a) first endless belt conveyor means (43, 44) having a horizontal flight for transporting products from an inlet end to an outlet end, the horizontal flight having first and second edges and moving at a predetermined velocity V; and
(b) first and second side belts disposed adjacent the first and second edges of the horizontal flight, the first and second side belts (54, 55) disposed non-coplanar to the horizontal flight, the first side belt (55) moving at a velocity V+ΔV and the second side belt (54) moving at a velocity V-ΔV, where ΔV is a relatively small, predetermined velocity increment, the distance between the first and second side belts being slightly greater than a predetermined maximum length dimension of the products.

5. The packaging machine of Claim 3 wherein the inspection means (65) further includes:
(a) electro-optical sensing devices for sensing the length, width and height dimensions of the products leaving the rotational movement imparting means.

6. The packaging machine as in Claim 2 wherein the non-conforming product ejecting means (67) is pneumatically operated and disposed a known fixed distance downstream of the inspecting means (65) to be activated when a non-conforming product detected by the inspecting means traverses the fixed distance.

7. The packaging machine as in Claim 1 wherein the drive means (76) is synchronized to the intermittent steps of the first conveyor (34).

8. The packaging machine of Claim 1 wherein the trays (12) include a plurality of cavities (14, 16) arranged side-by-side across the width dimension of the trays.

9. The packaging machine as in Claim 8 wherein the discharge end of the swing conveyor (66) traverses the arc corresponding to the width dimension of the trays synchronized with the movement of the first conveyor (34), whereby products discharged from the swing conveyor (66) becomes stacked in each of the plurality of cavities.

10. The packaging machine as in Claim 9 wherein the drive means (76) is operated in intermittent steps.

11. The packaging machine as in Claim 10 wherein the intermittent steps displace the discharge end of the swing conveyor a distance corresponding to a center-to-center spacing between adjacent cavities (14, 16) in the trays (12).

12. The packaging machine as in Claim 1 wherein the drive means (76) coupled to the swing conveyor is controlled by a microprocessor-based controller.

13. The packaging machine as in Claim 12 and further including:
(a) optical sensing means (84) disposed at the discharge end of the swing conveyor (66) for sending an electrical signal to the microprocessor-based controller for each time a product is discharged therefrom, the microprocessor-based controller responding to the electrical signal for stepping the drive means (76).

14. The packaging machine of Claim 1 wherein the first conveyor (34) is a flighted conveyor and includes a first horizontal section that is at a first elevation above a floor (18) on which the first conveyor (34) rests, a second horizontal section at a second elevation above the floor (18) less than the first elevation, and a third section descending from the first section to the second section at a predetermined slope, said loading station being in the third section.

15. The packaging machine of Claim 1 wherein the discharge end of the endless belt swing conveyor (66) has an overflow position beyond the width dimension of the tray (12).

16. The packaging machine of Claim 1 wherein the first conveyor (34) moves in intermittent steps corresponding to the height dimension of the product.

17. The packaging machine of Claim 14 wherein the swing conveyor (66) has the inlet end thereof at a higher elevation from the floor (18) than the discharge end and with a slope such that the discharge end of the swing conveyor (66) is substantially at right angles to the third section of the first conveyor (34) at the loading station.

18. The packaging machine of Claim 1 wherein the endless belt swing conveyor (66) includes a bottom belt (68) having opposed side edges and two side belts (70) aligned perpendicularly with the bottom belt at the opposed side edges thereof, the bottom belt (68) and the two side belts each traveling in the same direction from the inlet end to the discharge end.

19. A method of stacking products into cavities of compartmentalized trays (12) at a loading station comprising the steps of:
(a) forming a single file stream of the products on a first conveyor (42, 62) with a predetermined spacing therebetween;
(b) inspecting the products traversing the first conveyor (42, 62) to determine compliance with predetermined product size requirements;
(c) transporting the trays (12) on a tray conveyor (34) to the loading station in intermittent, incremental steps;
(d) transferring the products from the first conveyor (42, 62) to an inlet end of an endless belt swing conveyor (66) that is pivotable about a hinge located proximate the inlet end, such that a discharge end of the swing conveyor (66) can be made to traverse a predetermined horizontal arc corresponding to a width dimension of the trays (12);
(e) intermittently swinging the swing conveyor through the predetermined arc in steps corresponding to a spacing between adjacent cavities (14, 16) in the trays (12) each time a product is discharged from the discharge end of the swing conveyor (66) into one of said cavities (14, 16); and
(f) advancing the tray conveyor (34) one step corresponding to a height dimension of the products when the discharge end of the swing conveyor (66) traverses the predetermined arc.

20. The method as in Claim 19 and including the further step of reorienting any oblong products so that a major axis thereof becomes aligned with a desired direction of flow prior to step (a).

## Patentansprüche

1. Verpackungsmaschine zum Einsetzen von Produkten in Trays (12) mit vorbestimmten Längen- und Breitenabmessungen, wobei die Produkte Längen-, Breiten- und Höhenabmessungen besitzen, die in einen vorbestimmten Bereich fallen, so daß eine Vielzahl von Produkten in jedem der Trays (12) gestapelt werden kann, welche Maschine in Kombination umfaßt:
a) einen ersten Förderer (34) zum Transportieren der Trays (12) zu einer Befüllstation;
b) einen Endlosbandschwingförderer (66) mit einem Einlaßende und einem Austragende, wobei der Endlosbandschwingförderer (66) stromab eines Zuführförderers (42, 62) angeordnet ist, um die Produkte in einer durch Zwischenräume getrennten Reihe eines einreihigen Stromes vom Zuführförderer (42, 62) aufzunehmen und sie zur Befüllstation zu transportieren, wobei der Endlosbandschwingförderer (66) um eine nahe seinem Einlaßende angeordnete, aufwärts gerichtete Achse (74) schwenkbar ist; und
c) Antriebsmittel (76), die mit dem Endlosbandschwingförderer (66) gekoppelt sind, um den Schwingförderer um die Achse mit einer hin- und hergehenden Bewegung zu drehen, so daß das Austragende des Schwingförderers (66) einen im wesentlichen horizontalen, zumindest mit der Breitenabmessung der Trays (12) korrespondierenden Bogen überquert, während die Produkte in die Trays (12) ausgegeben werden.

2. Die Verpackungsmaschine nach Anspruch 1 und weiters umfassend:
a) Inspektionsmittel (65), die mit den Produkten, die den Zuführförderer (42, 62) überqueren, zusammenwirken, um zu bestimmen, ob die Längen-, Breiten- und Höhenabmessung der Produkte mit dem vorbestimmten Bereich übereinstimmen; und
b) Mittel (67) zum Auswerfen von nicht übereinstimmenden Produkten aus dem einreihigen Strom.

3. Die Verpackungsmaschine nach Anspruch 2 und weiters umfassend Mittel (42), die mit dem Zuführförderer (42, 62) zusammenwirken, um den Produkten eine Drehbewegung zu erteilen während sie den Zuführförderer überqueren.

4. Die Verpackungsmaschine nach Anspruch 3, wobei das den Produkten eine Drehbewegung erteilende Mittel (42) umfaßt:
a) erste Endlosbandfördermittel (43, 44) mit einem horizontalen Trum zum Transportieren der Produkte von einem Einlaßende zu einem Auslaßende, wobei das horizontale Trum erste und zweite Ränder besitzt und sich mit einer vorbestimmten Geschwindigkeit V bewegt; und
b) erste und zweite Seitenbänder, die benachbart der ersten und zweiten Ränder des horizontalen Trumes angeordnet sind, wobei die ersten und zweiten Seitenbänder (54, 55) nicht koplanar zum horizontalen Trum angeordnet sind, wobei das erste Seitenband (55) sich mit einer Geschwindigkeit V+ΔV und das zweite Seitenband (54) sich mit einer Geschwindigkeit V-ΔV bewegt, wobei ΔV ein relativ kleiner, vorbestimmter Geschwindigkeitsunterschied ist, wobei der Abstand zwischen erstem und zweitem Seitenband geringfügig größer ist als eine vorbestimmte maximale Längenabmessung der Produkte.

5. Die Verpackungsmaschine nach Anspruch 3, wobei das Inspektionsmittel (65) weiters umfaßt:
a) elektro-optische Abtastmittel zum Abtasten der Längen-, Breiten- und Höhenabmessungen der Produkte, die das die Drehbewegung erteilende Mittel verlassen.

6. Die Verpackungsmaschine nach Anspruch 2, wobei das die nicht übereinstimmenden Produkte auswerfende Mittel (67) pneumatisch betätigt wird und in einem bekannten fixen Abstand stromab des Inspektionsmittels (65) angeordnet ist, um aktiviert zu werden, wenn ein nicht übereinstimmendes Produkt, das durch das Inspektionsmittel ermittelt wurde, den fixen Abstand überquert.

7. Die Verpackungsmaschine nach Anspruch 1, wobei das Antriebsmittel (76) mit den intermittierenden Schritten des ersten Förderers (34) synchronisiert ist.

8. Die Verpackungsmaschine nach Anspruch 1, wobei die Trays (12) eine Vielzahl von Ausnehmungen (14, 16) enthalten, die quer über die Breitenabmessung der Trays Seite an Seite angeordnet sind.

9. Die Verpackungsmaschine nach Anspruch 8, wobei das Austragende des Schwingförderers (66) den mit der Breitenabmessung der Trays korrespondierenden Bogen synchronisiert mit der Bewegung des ersten Förderers (34) überquert, wodurch die vom Schwingförderer (66) ausgegebenen Produkte in jeder der Vielzahl von Ausnehmungen gestapelt wird.

10. Die Verpackungsmaschine nach Anspruch 9, wobei das Antriebsmittel (76) in intermittierenden Schritten betrieben wird.

11. Die Verpackungsmaschine nach Anspruch 10, wobei die intermittierenden Schritte das Austragende des Schwingförderers um einen Abstand verlagern, der mit dem Mitte-zu-Mitte-Abstand zwischen benachbarten Ausnehmungen (14, 16) der Trays (12) korrespondiert.

12. Die Verpackungsmaschine nach Anspruch 1, wobei das mit dem Schwingförderer gekoppelte Antriebsmittel (76) durch eine auf einem Mikroprozessor basierende Steuerung gesteuert wird.

13. Die Verpackungsmaschine nach Anspruch 12 und weiters umfassend:
a) optische Abtastmittel (84), die am Austragende des Schwingförderers (66) angeordnet sind, um jedesmal, wenn von dort ein Produkt ausgegeben wird, ein elektrisches Signal an die auf einem Mikroprozessor basierende Steuerung zu senden, wobei die auf einem Mikroprozessor basierende Steuerung auf das elektrische Signal zum Schalten des Antriebsmittels (76) anspricht.

14. Die Verpackungsmaschine nach Anspruch 1, wobei der erste Förderer (34) ein mit Leitblechen versehener Förderer ist und einen ersten horizontalen Abschnitt umfaßt, der auf einem ersten Höhenniveau über einem Boden (18) angeordnet ist, auf dem der erste Förderer (34) aufruht, einen zweiten horizontalen Abschnitt umfaßt, der auf einem zweiten Höhenniveau über dem Boden (18) niedriger als das erste Höhenniveau angeordnet ist, und einen dritten Abschnitt umfaßt, der vom ersten Abschnitt zum zweiten Abschnitt mit einem vorbestimmten Gefälle absinkt, wobei sich die Befüllstation im dritten Abschnitt befindet.

15. Die Verpackungsmaschine nach Anspruch 1, wobei das Austragende des Endlosbandschwingförderers (66) eine Überlaufstellung außerhalb der Breitenabmessung des Trays (12) besitzt.

16. Die Verpackungsmaschine nach Anspruch 1, wobei sich der erste Förderer (34) in intermittierenden Schritten bewegt, die zur Höhenabmessung des Produktes korrespondieren.

17. Die Verpackungsmaschine nach Anspruch 14, wobei der Schwingförderer (66) ein Einlaßende besitzt, das auf einem höheren Höhenniveau über dem Boden (18) angeordnet ist als das Austragende, und mit einem Gefälle versehen ist, so daß das Austragende des Schwingförderers (66) im wesentlichen senkrecht zum dritten Abschnitt des ersten Förderers (34) an der Befüllstation steht.

18. Die Verpackungsmaschine nach Anspruch 1, wobei der Endlosbandschwingförderer (66) ein unteres Band (68) mit entgegengesetzten Seitenrändern und zwei Seitenbänder (70) umfaßt, die senkrecht zum unteren Band an dessen entgegengesetzten Seitenrändern ausgerichtet sind, wobei sich das untere Band (68) und die beiden Seitenbänder in die gleiche Richtung vom Einlaßende zum Austragende bewegen.

19. Ein Verfahren zum Stapeln von Produkten in die Ausnehmungen von mit Abteilen versehenen Trays (12) an einer Befüllstation mit den Schritten:
a) Bilden eines einreihigen Stromes von Produkten auf einem ersten Förderer (42, 62) mit vorbestimmten Zwischenräumen dazwischen;
b) Inspizieren der den ersten Förderer (42, 62) überquerenden Produkte zur Bestimmung der Übereinstimmung mit vorbestimmten Produktgrößenanforderungen;
c) Transportieren der Trays (12) auf einem Trayförderer (34) zur Befüllstation in intermittierenden, inkrementellen Schritten;
d) Übertragen der Produkte vom ersten Förderer (42, 62) zu einem Einlaßende eines Endlosbandschwingförderers (66), der um ein nahe dem Einlaßende gelegenes Gelenk schwenkbar ist, so daß ein Austragende des Schwingförderers (66) dazu gebracht werden kann, einen vorbestimmten, horizontalen Bogen zu überqueren, der mit der Breitenabmessung der Trays (12) korrespondiert;
e) intermittierendes Schwingen des Schwingförderers durch den vorbestimmten Bogen in Schritten, die mit dem Abstand zwischen benachbarten Ausnehmungen (14, 16) in den Trays (12) korrespondieren, jedesmal wenn ein Produkt vom Austragende des Schwingförderers (66) in eine der Ausnehmungen (14, 16) ausgegeben wird; und
f) Vorwärtsbewegen des Trayförderers (34) um einen Schritt, der mit der Höhenabmessung der Produkte korrespondiert, während das Austragende des Schwingförderers (66) den vorbestimmten Bogen überquert.

20. Das Verfahren nach Anspruch 19 mit dem weiteren Schritt der Neuorientierung von länglichen Produkten, so daß deren größere Achse vor dem Schritt (a) mit der gewünschten Richtung des Stromes ausgerichtet wird.

## Revendications

1. Machine de conditionnement destinée à insérer des produits dans des barquettes (12) de dimensions de longueur et de largeur prédéterminées, les produits présentant des dimensions de longueur, de largeur et de hauteur situées dans une plage prédéterminée de sorte qu'une pluralité de produits peut être empilée dans chacune desdites barquettes (12), ladite machine comprenant, en combinaison :
a) un premier transporteur (34) destiné à transporter lesdites barquettes (12) jusqu'à une station de chargement ;
b) un transporteur oscillant à bande sans fin (66) comportant une extrémité d'entrée et une extrémité de décharge, le transporteur oscillant à bande sans fin (66) étant disposé en aval d'un transporteur d'alimentation (42, 62) pour recevoir les produits dans un ordre sériel de manière espacée en suivant une chaîne à une seule file depuis le transporteur d'alimentation (42, 62) et les transporter jusqu'à la station de chargement, le transporteur oscillant à bande sans fin (66) pouvant pivoter autour d'un axe dirigé vers le haut (74) à proximité de son extrémité d'entrée ; et
c) un moyen d'entraînement (76) couplé au transporteur oscillant à bande sans fin (66) pour mettre le transporteur oscillant en rotation autour de l'axe avec un déplacement en va-et-vient de sorte que l'extrémité de décharge du transporteur oscillant (66) traverse un arc sensiblement horizontal correspondant au moins à la dimension de largeur des barquettes (12) pendant que des produits sont déchargés dans les barquettes (12).

2. Machine de conditionnement selon la revendication 1 et comprenant en outre :
a) un moyen de contrôle (65) coopérant avec les produits traversant le transporteur d'alimentation (42, 62) pour déterminer si les dimensions de longueur, de largeur et de hauteur des produits sont conformes à la plage prédéterminée ; et
b) un moyen (67) destiné à éjecter les produits non conformes de la chaîne ordonnée à une seule file.

3. Machine de conditionnement selon la revendication 2 et comprenant en outre un moyen (42) coopérant avec le transporteur d'alimentation (42, 62) pour impartir un mouvement de rotation aux produits pendant qu'ils traversent le transporteur d'alimentation.

4. Machine de conditionnement selon la revendication 3, dans laquelle le moyen (42) destiné à impartir un mouvement de rotation aux produits comprend :
(a) un premier moyen transporteur à bande sans fin (43, 44) comportant une palette horizontale pour transporter les produits d'une extrémité d'entrée à une extrémité de sortie, la palette horizontale possédant des premier et second bords et se déplaçant à une vitesse prédéterminée V ; et
(b) des première et seconde courroies latérales disposées à proximité des premier et second bords de la palette horizontale, les première et seconde courroies latérales (54, 55) étant disposées de façon non coplanaire par rapport à la palette horizontale, la première courroie latérale (55) se déplaçant à une vitesse V + ΔV et la seconde courroie latérale (54) se déplaçant à une vitesse V - ΔV, où ΔV est un incrément de vitesse prédéterminé relativement petit, la distance entre les première et seconde courroies latérales étant légèrement supérieure à une dimension de longueur maximale prédéterminée des produits.

5. Machine de conditionnement selon la revendication 3 dans laquelle le moyen de contrôle (65) comprend en outre :
(a) des dispositifs de détection électro-optiques destinés à détecter les dimensions de longueur, de largeur et de hauteur des produits quittant le moyen destiné à impartir un mouvement de rotation.

6. Machine de conditionnement selon la revendication 2, dans laquelle le moyen déjection de produit non conforme (67) est à commande pneumatique et est disposé à une distance fixe connue en aval du moyen de contrôle (65) de façon à être activé lorsqu'un produit non conforme détecté par le moyen de contrôle traverse la distance fixe.

7. Machine de conditionnement selon la revendication 1, dans laquelle le moyen d'entraînement (76) est synchronisé avec les pas intermittents du premier transporteur (34).

8. Machine de conditionnement selon la revendication 1, dans laquelle les barquettes (12) comprennent une pluralité de cavités (14, 16) disposées côte à côte à travers la dimension de largeur des barquettes.

9. Machine de conditionnement selon la revendication 8, dans laquelle l'extrémité de décharge du transporteur oscillant (66) traverse l'arc correspondant à la dimension de largeur des barquettes de façon synchronisée avec le déplacement du premier transporteur (34), ce par quoi les produits déchargés du transporteur oscillant (66) s'empilent dans chacune de la pluralité de cavités.

10. Machine de conditionnement selon la revendication 9, dans laquelle le moyen d'entraînement (76) est commandé par pas intermittents.

11. Machine de conditionnement selon la revendication 10, dans laquelle les pas intermittents déplacent l'extrémité de décharge du transporteur oscillant d'une distance correspondant à un espacement centre-à-centre entre des cavités adjacentes (14, 16) dans les barquettes (12).

12. Machine de conditionnement selon la revendication 1, dans laquelle le moyen d'entraînement (76) couplé au transporteur oscillant est commandé par un régisseur dont la base est un microprocesseur.

13. Machine de conditionnement selon la revendication 12, et comprenant en outre :
(a) un moyen de détection optique (84) disposé à l'extrémité de décharge du transporteur oscillant (66) de façon à envoyer un signal électrique au régisseur dont la base est un microprocesseur à chaque fois qu'un produit est déchargé de celui-ci, le régisseur dont la base est un microprocesseur répondant au signal électrique afin de commander pas à pas le moyen d'entraînement (76).

14. Machine de conditionnement selon la revendication 1, dans laquelle le premier transporteur (34) est un transporteur à raclettes et comprend une première section horizontale située à une première hauteur au-dessus d'un plancher (18) sur lequel repose le premier transporteur (34), une seconde section horizontale située à une seconde hauteur au-dessus du plancher (18) inférieure à la première hauteur et une troisième section descendant de la première section à la seconde section à une pente prédéterminée, ladite station de chargement se trouvant dans la troisième section.

15. Machine de conditionnement selon la revendication 1, dans laquelle l'extrémité de décharge du transporteur oscillant à bande sans fin (66) a une position de dépassement au-delà de la dimension de largeur de la barquette (12).

16. Machine de conditionnement selon la revendication 1, dans laquelle le premier transporteur (34) se déplace par pas intermittents correspondant à la dimension de hauteur du produit.

17. Machine de conditionnement selon la revendication 14, dans laquelle l'extrémité d'entrée du transporteur oscillant (66) est située à une hauteur par rapport au plancher (18) supérieure à celle de l'extrémité de décharge et sa pente est telle que l'extrémité de décharge du transporteur oscillant (66) est sensiblement à angle droit par rapport à la troisième section du premier transporteur (34) au niveau de la station de chargement.

18. Machine de conditionnement selon la revendication 1, dans laquelle le transporteur oscillant à bande sans fin (66) comprend une courroie inférieure (68) comportant des bords latéraux opposés et deux courroies latérales (70) alignées perpendiculairement avec la courroie inférieure au niveau de ses bords latéraux opposés, la courroie inférieure (68) et les deux courroies latérales se déplaçant chacune dans la même direction de l'extrémité d'entrée à l'extrémité de décharge.

19. Procédé d'empilement de produits dans les cavités de barquettes compartimentées (12) au niveau d'une station de chargement comprenant les étapes consistant à :
(a) former une chaîne à une seule file des produits sur un premier transporteur (42, 62) avec un espacement prédéterminé entre eux ;
(b) contrôler les produits traversant le premier transporteur (42, 62) pour déterminer leur conformité avec les exigences de dimensions prédéterminées des produits ;
(c) transporter les barquettes (12) sur un transporteur à barquettes (34) jusqu'à la station de chargement par pas incrémentiels intermittents ;
(d) transférer les produits du premier transporteur (42, 62) à une extrémité d'entrée d'un transporteur oscillant à bande sans fin (66) pouvant pivoter autour d'une articulation située à proximité de l'extrémité d'entrée, de sorte qu'une extrémité de décharge du transporteur oscillant (66) peut être amenée à traverser un arc horizontal prédéterminé correspondant à une dimension de largeur des barquettes (12),
(e) osciller par intermittence le transporteur oscillant sur l'arc prédéterminé par pas correspondant à un espacement entre des cavités adjacentes (14, 16) dans les barquettes (12) à chaque fois qu'un produit est déchargé de l'extrémité de décharge du transporteur oscillant (66) dans une desdites cavités (14, 16) ; et
(f) avancer le transporteur à barquettes (34) d'un pas correspondant à une dimension de hauteur des produits lorsque l'extrémité de décharge du transporteur oscillant (66) traverse l'arc prédéterminé.

20. Procédé selon la revendication 19 et comprenant l'autre étape consistant à réorienter tous les produits oblongs de sorte que leur grand axe devient aligné avec une direction de circulation souhaitée avant l'étape (a).
